# EUROPÄISCHE PATENTSCHRIFT

(11) **EP 3 356 105 B1**
(45) Veröffentlichungstag und Bekanntmachung des Hinweises auf die Patenterteilung: **08.09.2021**
(21) Anmeldenummer: 16770264.6
(22) Anmeldetag: 22.09.2016
(51) Int. Cl.: B29C 33/40, A61C 13/00, A61C 13/20, B29C 39/14, B29C 39/38

(54) **VERFAHREN ZUR HERSTELLUNG VON DENTALEN KOMPOSITBLÖCKEN**
METHOD FOR THE PREPARATION OF DENTAL COMPOSITE BLOCKS
PROCEDE DE FABRICATION DE BLOCS COMPOSITES DENTAIRES

(30) Priorität: 28.09.2015 EP 15187121
(43) Veröffentlichungstag der Anmeldung: 08.08.2018
(73) Patentinhaber: Coltène/Whaledent AG, 9450 Altstaetten (CH)
(72) Erfinder: KOPFMANN, Cornelia, 9000 St. Gallen (CH); BÖHNER, Ralf, 9451 Kriessern (CH)
(74) Vertreter: Hepp Wenger Ryffel AG
(86) Internationale Anmeldenummer: PCT/EP2016/072497
(87) Internationale Veröffentlichungsnummer: WO 2017/055159

(56) Entgegenhaltungen:
- EP-A1- 0 118 079
- EP-A1- 2 881 077
- WO-A1-00/40206
- WO-A1-03/078143
- WO-A1-2013/076493
- WO-A1-2015/045698
- WO-A1-2015/092392
- CN-A- 104 494 105
- FR-A1- 2 614 490
- US-A- 4 682 644
- US-A1- 2004 241 614
- US-A1- 2013 277 873
- US-A1- 2014 162 216
- US-A1- 2014 248 584
- Anonymous: "Plastics - Thermal Conductivity Coefficients", , 21. Juni 2016 (2016-06-21), XP055282325, Gefunden im Internet: URL:http://www.engineeringtoolbox.com/ther mal-conductivity-plastics-d_1786.html [gefunden am 2016-06-21]

## Beschreibung

Die Erfindung betrifft ein Verfahren und eine Vorrichtung zur Herstellung von dentalen Kompositblöcken.

Verfahren zur Herstellung von dentalen Kompositblöcken sind hinreichend bekannt. Dabei werden dentale Kompositmaterialien in eine Form eingefüllt und ausgehärtet. Polymerisierbare Komponenten, beispielsweise eines Kompositmaterials, werden in der Regel u.a. mittels eines Initiators ausgehärtet.

WO 2007/099158 A2 beschreibt ein Material umfassend eine polymerisierbare Komponente und einen Initiator, welcher in phlegmatisierter Form vorliegt. Das Material wird in eine Küvette einbeziehungsweise nachgepresst, dass Material innerhalb der Küvette erwärmt und so der phlegmatisierte Initiator freigesetzt. Entsprechend erfolgt eine wärmeinduzierte Polymerisation des Materials. Nachteilig an diesem Verfahren ist, dass ein aktives Nachpressen des Materials in der Küvette notwendig ist, um einen Polymerisationsschrumpf zu vermeiden. Dies ist vergleichsweise aufwändig und schwierig zu kontrollieren.

US 2014/0162216 beschreibt Kompositblöcke, die durch thermische Härtung bei Temperaturen zwischen 100°C-150°C erhalten werden. US 2016/0128812 beschreibt Kompositblöcke, die durch Verpressen bei erhöhter Temperatur vor der eigentlichen Aushärtung erhalten werden.

Es ist daher die Aufgabe der Erfindung, die Nachteile des Stands der Technik zu überwinden. Insbesondere ist es eine Aufgabe der Erfindung, ein Verfahren zur Herstellung von dentalen Kompositblöcken bereitzustellen, welches besonders gut kontrollierbar ist, schnell ausführbar und eine erhöhte Qualität der Kompositblöcke gewährleistet. Diese Aufgaben werden durch die Merkmale der unabhängigen Ansprüche gelöst.

Die Erfindung betrifft ein Verfahren zur Herstellung von dentalen Kompositblöcken. Eine nicht zur Erfindung gehörende im Wesentlichen hohlzylindrische Vorrichtung mit einer ersten und einer zweiten Öffnung wird bereitgestellt zur kontinuierlichen Herstellung eines dentalen Kompositblocks. Die hohlzylindrische Form kann ein zweiseitig geöffneter Behälter sein. Des Weiteren werden ein aushärtbares Kompositmaterial und eine Temperiereinrichtung bereitgestellt. Durch die erste Öffnung wird das aushärtbare Kompositmaterial in die Vorrichtung eingebracht. Das Kompositmaterial kann hierbei kontinuierlich eingebracht werden. Das eingebrachte Kompositmaterial wird durch einen Energieeintrag mittels der Temperiereinrichtung ausgehärtet. Dabei wird der Energieeintrag aufrechterhalten bis ein im Wesentlichen formstabiler Kompositblock hergestellt ist. Dabei kann der Energieeintrag über eine Länge von 1 cm bis 300 cm, bevorzugt 1,5 bis 200 cm, besonders bevorzugt 5 bis 60 cm der im wesentlichen hohlzylindrischen Vorrichtung (1) und/oder für eine Dauer von 1 min bis 200 min, bevorzugt 5 bis 60 min, besonders bevorzugt 15 bis 45 min, erfolgen. Aushärtbares Kompositmaterial wird durch die erste Öffnung der im Wesentlichen hohlzylindrischen Vorrichtung nachgeführt. Die Nachführung des aushärtbaren Kompositmaterials kann hierbei kontinuierlich erfolgen. Das Kompositmaterial bewegt sich also relativ zur Vorrichtung. Ebenso kann das aushärtbare Kompositmaterial nachgepresst werden. Das ausgehärtete Kompositmaterial wird aus der zweiten Öffnung der Vorrichtung ausgeleitet. Derart wird ein Verfahren bereitgestellt, welches besonders gut kontrollierbar ist und schnelle Fertigungszeiten gewährleistet. Insbesondere werden derart verbesserte Kompositblöcke mit verbesserten Eigenschaften bereitgestellt. Insbesondere treten geringere Fehlstellen innerhalb der dentalen Kompositblöcke auf.

Das Nachführen, von aushärtbarem Kompositmaterial erfolgt bei maximal 10 Bar. Die nicht zur Erfindung gehörende im Wesentlichen hohlzylindrische Vorrichtung kann jede Form sein, beispielsweise mit aufgewölbten Kanten oder trapezförmig. Da die typischerweise im Spitzguss hergestellten hohlzylindrischen Vorrichtungen in der Regel abweichend von exakt hohlzylindrischen Formen sind, wird unter einer im Wesentlichen hohlzylindrischen Vorrichtung hier und im Folgenden verstanden, dass auch geometrische Abweichungen von exakten hohlzylindrischen Formen unter dem vorgenannten Begriff zu verstehen sind.

Das ausgehärtete und ausgeleitete Kompositmaterial kann nachfolgend bearbeitet, insbesondere zurechtgeschnitten werden. Auf diese Weise kann das ausgeleitete Kompositmaterial zu Grössen zurechtgeschnitten werden, welche nachfolgend für die Herstellung von dentalen Restaurationen jeglicher Grösse einsetzbar sind.

Des Weiteren kann eine Halterung zur Weiterverarbeitung des Kompositmaterials zu einer dentalen Restauration an das ausgehärtete Kompositmaterial angebracht werden. Dabei können jegliche Halterungen, welche im Dentalbereich verwendet werden, angebracht werden. Auf diese Weise kann das ausgehärtete Kompositmaterial für die Weiterverarbeitung beispielsweise in handelsüblichen CAD/CAM-Verfahren verwendet werden. Somit ist das ausgehärtete Kompositmaterial für die Herstellung von dentalen Restaurationen auf allen handelsüblichen Plattformen verwendbar.

Die im Wesentlichen hohlzylindrische Vorrichtung kann eine Breite im Bereich von 0,5 bis 5 cm, insbesondere 1 bis 3 cm aufweisen. Die Grundfläche der im Wesentlichen hohlzylindrischen Vorrichtung kann im Bereich von 0,25 bis 25 cm², insbesondere 1 bis 9 cm², liegen. Auf diese Weise können dentale Restaurationen unterschiedlichster Grössen aus dem ausgehärteten Material hergestellt werden.

Das Kompositmaterial kann geeignete polymerisierbare mono- oder multifunktionelle Monomere der organischen Phase enthalten. Dabei sind geeignete polymerisierbaren mono- oder multifunktionelle Monomere der organischen Phase bevorzugt Mono(meth)acrylate, wie Methyl-, Ethyl-, Butyl-, Benzyl-, Furfuryl- oder Phenyl(meth)acrylat, mehrfunktionelle Acrylate und Methacrylate wie zum Beispiel Bisphenol-(A)-di(meth)acrylat, Bisphenol-AGlycidylmethacrylat (bekannt als "Bis GMA", welches ein Additionsprodukt aus Methacrylsäure und Bisphenol-A-diglycidylether ist), UDMA (ein Additionsprodukt aus 2-Hydroxyethylmethacrylat und 2,2,4-Hexamethylendiisocyanat), Di-, Tri- und Tetraethylenglykoldi(meth)acrylat (wie z.B. TEGDMA), Decandioldi(meth)acrylat, Trimethylolpropantri(meth)acrylat, Pentaerythrittetra(meth)acrylat und Butandioldi(meth)acrylat, 1,10-Decandioldi(meth)acrylat oder 1,12-Dodecandioldi(meth)acrylat. Ebenso sind organische Phasen umfassend methacrylatmodifizierte Polysiloxane verwendbar.

Prinzipiell kann es bei der Verwendung von Monomeren, die zu einer hohen Netzwerkdicht führen, und durch Druck generiertes Fliessen in bereits anpolymerisierten Schichten zu Fehlstellen führen. Da das Kompositmaterial bevorzugt difunktionelle Monomere enthält, resultiert bei der Polymerisation eine hohe Netzwerkdichte, so dass die Gefahr zur Bildung von Fehlstellen sehr hoch ist. In dem vorgängig beschriebenen Verfahren zur kontinuierlichen Herstellung eines dentalen Kompositblocks können trotz einer hohen resultierenden Netzwerkdichte Kompositblöcke mit geringeren Fehlstellen hergestellt werden.

Das Kompositmaterial kann > 40 Gew.-% eines Füllers, im Sinne eines Füllstoffes oder einer Mischung von Füllstoffen, aufweisen. Dabei ist insbesondere eine relative Zusammensetzung vorgesehen, welche eine Einzelkomponente oder Zusammensetzungen aus Einzelkomponenten darstellt. Der Füller beziehungsweise die Füller können singulär, im Sinne von isolierten Füller sein, aber auch agglomeriert oder als Cluster vorliegen. Unter Agglomeraten werden allgemein mehr oder weniger verfestigte Anhäufungen von vorher losen Bestandteilen zu einem festen Verbund verstanden. In der Verfahrenstechnik werden Agglomerate beispielsweise durch Granulieren, Flockieren oder Sintern erhalten. Die Cluster können dabei mechanisch oder chemisch verbunden sein. Die vorgenannten > 40 Gew.-% des Füllers können 0 bis 100 Gew.-% Dentalglas mit einer durchschnittlichen Partikelgrösse von 0,1 bis 5 µm (beispielsweise erhältlich von Schott), 0 bis 100 Gew.-% Splitter aus organischer Matrix und einem organischen Füller mit einer durchschnittlichen Partikelgrösse von 1 bis 30 µm aufweisen. Dabei entsprechen die Splitter einem gemahlenen Kompositmaterial. Des Weiteren umfasst die Zusammensetzung 0 bis 100 Gew.- % im Sol-Gel-Verfahren hergestellte anorganische Füller mit einer durchschnittlichen Partikelgrösse von 0,1 bis 5 µm sowie 0 bis 100 Gew.-% einer insbesondere pyrogenen Kieselsäure mit einer durchschnittlichen Partikelgrösse von 0,002 bis 0,25 µm. Auf diese Weise wird eine Kompositmaterialzusammensetzung für das Verfahren bereitgestellt, welche den Anforderungen im Dentalbereich, beispielsweise hinsichtlich Abrasionsfähigkeit, Kompressionshärte und Langlebigkeit, gerecht wird.

Die Temperiereinrichtung kann einen geeigneten Energieeintrag, welcher durch den Fachmann in Routineversuchen an die gegebenen Bedingungen angepasst werden kann, auf die Wandung der im Wesentlichen hohlzylindrischen Vorrichtung ausüben. Derart wird ein definierter Energieeintrag auf die hohlzylindrische Vorrichtung sichergestellt und das eingebrachte Kompositmaterial ausgehärtet. Durch eine Regelung beziehungsweise Steuerung des Energieeintrags lässt sich die für die Aushärtung erforderliche Energie abhängig vom eingesetzten Kompositmaterial anpassen.

Für das Material der Vorrichtung wird bevorzugt ein Stoff mit einer Wärmeleitfähigkeit von 0,05 bis 12 W/(m x K) verwendet. Dabei werden bevorzugt Kunststoffe eingesetzt, die ungefüllt, gefüllt oder geschäumt sein können. Das Kunststoffmaterial kann eine Wärmeleitfähigkeit von 0,14 bis 1,2 W/(m x K) aufweisen. Es können aber auch andere Materialien, beispielsweise Metalle eingesetzt werden, die eine höhere Wärmeleitfähigkeit aufweisen. In diesem Falle kann die Wärmeleitung durch einen Unterbruch beispielsweise einen Isolator oder eine Isolationsschicht mit einer Wärmeleitfähigkeit von 0,05 bis 12 W/(m x K) verhindert werden. Dabei ist der Isolator nahe dem Bereich des Energieeintrags mittels der Temperiereinrichtung angeordnet. Auf diese Weise wird sichergestellt, dass sich die Wärmeenergie nicht auf die gesamte Vorrichtung ausbreitet und so ein ungewolltes Polymerisieren von eingebrachtem Kompositmaterial ausserhalb des Polymerisationsbereichs verhindert wird.

Die Erfindung betrifft ein Verfahren zur Herstellung von dentalen Kompositblöcken umfassend die folgenden Schritte. Bereitstellen einer im Wesentlichen hohlzylindrischen Form, wobei die im Wesentlichen hohlzylindrische Form ein Behälter sein kann, Bereitstellen eines aushärtbaren Kompositmaterials, und Bereitstellen einer fokussierbaren Wärmequelle. Das aushärtbare Kompositmaterial wird in die im Wesentlichen hohlzylindrische Form eingebracht. Das eingebrachte, aushärtbare Kompositmaterial in der Form kann mittels Gravitation, Sedimentation oder Pressen verdichtet werden. Das eingebrachte, aushärtbare Kompositmaterial wird mittels eines Wärmetransfers auf die im Wesentlichen hohlzylindrische Form ausgehärtet, wobei das Kompositmaterial konstant in der Form verbleibt bzw. sich nicht relativ zur Form bewegt. Der Wärmetransfer kann sukzessive erfolgen. Dies wird beispielsweise derart erreicht, dass ein mit aushärtbarem Kompositmaterial befüllter Behälter, bspw. eine Küvette, in ein Wärmebad eingetaucht wird und sich damit die Wärmefront am Behälter entlang bewegt. Dabei ist die Wandung der im Wesentlichen hohlzylindrischen Form, welche auch ein Behälter sein kann, derart ausgestaltet, dass sie eine Wärmeleitfähigkeit im Bereich von 0,05 bis 12 W/(m x K) aufweist. Die Wärmeleitfähigkeit der Wandung kann auch im Bereich von 0,05 bis 12 W/(m x K) liegen.

Auf diese Weise wird ein Verfahren bereitgestellt, in welchem auf besonders vorteilhafte Weise ein eingebrachtes Kompositmaterial ausgehärtet werden kann. Derart wird insbesondere ein ausgehärtetes Kompositmaterial für ein homogenes Werkstück ohne Porositäten und Lufteinschlüsse bereitgestellt. Das ausgehärtete Kompositmaterial wird derart ohne Spannung und entsprechen mit geringeren Fehlstellen hergestellt. Das optionale luftfreie Verdichten kann beispielsweise durch ein Entlüften beispielsweise mittels Vakuum und/oder Zentrifugation erfolgen.

Unter "sukzessiven Wärmetransfer" wird hier und im Folgenden verstanden, dass der Wärmeeintrag zunächst für eine gewisse Zeitdauer auf einen Bereich der im Wesentlichen hohlzylindrischen Form erfolgt. Anschliessend erfolgt der Wärmeeintrag für eine gewisse Zeitdauer auf einen, insbesondere an den ersten Bereich angrenzenden, zweiten Bereich der im Wesentlichen hohlzylindrischen Form. Ein derartiger sukzessiver Wärmetransfer kann auf wenigstens zwei oder mehr Bereiche der im Wesentlichen hohlzylindrischen Form erfolgen, sodass aushärtbares Kompositmaterial innerhalb der im Wesentlichen hohlzylindrischen Form sukzessive, im Sinne von schichtweise, in mehreren Bereichen ausgehärtet wird.

Unter einer "fokussierbaren Wärmequelle" wird hier und im Folgenden verstanden, dass der Wärmeeintrag der Wärmequelle auf ein Objekt, hier die der im Wesentlichen hohlzylindrischen Form, örtlich fokussierbar ist. D.h. der Wärmeeintrag kann durch die Wärmequelle auf einen Teilbereich der im Wesentlichen hohlzylindrischen Form fokussiert werden. Der hauptsächliche Wärmeeintrag erfolgt somit auf den Bereich des Objekts, der von der Wärmequelle örtliche fokussiert ist. Derart wird das Kompositmaterial innerhalbe der im Wesentlichen hohlzylindrischen Form nicht als Ganzes gleichzeitig ausgehärtet, wie beispielsweise in einem Ofen, sondern das Kompositmaterial wird bereichsweise und somit schichtweise ausgehärtet.

Die vorgängig beschriebenen Kompositmaterialien können gleichermassen verwendet werden.

Des Weiteren kann eine Halterung zur Weiterverarbeitung des Kompositmaterials zu einer dentalen Restauration an das ausgehärtete Kompositmaterial angebracht werden. Derart ist das ausgehärtete Kompositmaterial gängigen Plattformen für die Weiterverarbeitung zu dentalen Restaurationen zuführbar.

Die Wärmequelle kann einen Energieeintrag auf die Wandung der im Wesentlichen hohlzylindrischen Form ausüben, bis ein im Wesentlichen formstabiler Kompositblock hergestellt ist. Derart wird ein definierter Energieeintrag auf die im Wesentlichen hohlzylindrische Form sichergestellt und das eingebrachte Kompositmaterial ausgehärtet. Durch eine Regelung beziehungsweise Steuerung des Energieeintrags lässt sich die für die Aushärtung erforderliche Energie abhängig vom eingesetzten Kompositmaterial anpassen. Der Energieeintrag lässt sich durch einen Fachmann in Routineversuchen an die gegebenen Bedingungen anpassen.

Die im Wesentlichen hohlzylindrische Form, insbesondere der Behälter, kann derart ausgestaltet sein, dass sie im Wesentlichen die Abmessungen eines dentalen Kompositblocks aufweist. Die Breite kann im Bereich von 0,5 bis 5 cm, insbesondere 1 bis 3 cm, liegen. Die Grundfläche der im Wesentlichen hohlzylindrischen Form kann im Bereich von 0,25 bis 25 cm², insbesondere 1 bis 9 cm², liegen. Ebenso sind Abmessungen von 12 cm x 3 cm, insbesondere 10 cm x 2,5 cm, vorsehbar. Auf diese Weise können dentalen Restaurationen unterschiedlichster Grössen aus dem ausgehärteten Material hergestellt werden.

Das Kompositmaterial kann > 40 Gew.-% Füller, im Sinne eines Füllstoffes aufweisen. Das Kompositmaterial und der Füller können wie vorgängig erläutert zusammengesetzt sein.

Die Wärmequelle und/oder die im Wesentlichen hohlzylindrische Form, insbesondere der Behälter, können höhenverstellbar angeordnet sein. Dabei können die beiden vorgenannten Elemente insbesondere relativ zu einander höhenverstellbar angeordnet sein. Darunter ist zu verstehen, dass entweder die Wärmequelle beweglich gegenüber der im Wesentlichen hohlzylindrischen Form angeordnet ist, die im Wesentlichen hohlzylindrische Form gegenüber der Wärmequelle höhenverstellbar angeordnet ist, oder sowohl die Wärmequelle als auch den im Wesentlichen hohlzylindrische Form gegeneinander höhenverstellbar angeordnet sind. Auf diese Weise können die relativen Positionen der beiden vorgenannten Elemente in Abhängigkeit voneinander angepasst werden, und so auf besonders optimale Weise ein sukzessiver Energieeintrag auf die Form ermöglicht werden. Derart lässt sich insbesondere das Verfahren besonders vorteilhaft steuern. Werden die Form und die Wärmequelle relativ zu einander bewegt, kann die Geschwindigkeit der Bewegung genutzt werden, um den Wärmeeintrag auf die Form und somit die Aushärtung des Kompositmaterials zu kontrollieren.

Ein weiterer Aspekt der Erfindung betrifft die Verwendung eines dentalen Kompositblocks, hergestellt nach einem der vorgenannten Verfahren für die Herstellung von dentalen Ersatzteilen. Derart werden dentale Ersatzteile aus dem ausgehärteten Kompositmaterial, welches besonders vorteilhafte Eigenschaften beispielsweise Abrasionsfähigkeit, Kompressionshärte und Langlebigkeit aufweisen, hergestellt.

Des Weiteren betrifft die Erfindung einen dentalen Kompositblock, welcher hergestellt oder herstellbar mit einem der vorgenannten Verfahren ist.

Ein weiterer Aspekt der Erfindung betrifft eine Durchflussvorrichtung, welche im Wesentlichen hohlzylindrisch ausgestaltet ist, insbesondere ein zweiseitig geöffneter Behälter, für die Herstellung eines dentalen Kompositblocks. Die Vorrichtung weist in einem ersten Bereich entlang eines Teils der Länge der Vorrichtung eine Isolierung auf. Ausserdem weist die Vorrichtung in einem zweiten Bereich eine weitere Isolierung auf. Dabei besteht zwischen dem ersten und der zweiten Bereich entlang der Länge ein Abstand. Die Isolatoren sind derart ausgestaltet und angeordnet, dass bei einem Wärmeeintrag auf einen Bereich der Form die Wärme, insbesondere in dem vorgenannten Bereich der Form, konzentriert wird.

Auf diese Weise wird ein Energieeintrag auf entfernte Bereiche verhindert und so ein ungewolltes Polymerisieren von eingeleitetem Kompositmaterial vor dem Bereich des Wärmeeintrags ausgeschlossen. Derart wird ein scharfer beziehungsweise konzentrierter Bereich zur Aushärtung des Kompositmaterials bereitgestellt. Die zwei Isolatoren können so angeordnet sein, sodass der Bereich des Wärmeeintrags von den beiden Isolatoren eingeschlossen wird, wodurch die Wärmefront nochmals verschärft wird. Entsprechend ist die vorgenannte Vorrichtung inklusive Isolatoren in einem der vorgenannten Herstellungsverfahren, welche kontinuierlich ablaufen können, einsetzbar. Unter kontinuierlich wird vorgängig hier und im Folgenden verstanden, dass aushärtbares Kompositmaterial kontinuierlich in eine erste Öffnung einer Vorrichtung eingebracht wird, dass eingebrachte Material ausgehärtet wird, und aus einer zweiten Öffnung ausgeleitet wird.

Die Erfindung wird im Folgenden anhand von Abbildungen exemplarisch Ausführungsbeispiele näher erläutert.

Es zeigen:
- Figur 1:: Eine erste nicht zur Erfindung gehörende Ausführungsform einer Vorrichtung zur Ausführung des erfindungsgemässen Verfahrens zur Herstellung von dentalen Kompositblöcken;
- Figur 2:: Eine zweite zur Erfindung gehörende Ausführungsform einer Vorrichtung zur Ausführung des erfindungsgemässen Verfahrens zur Herstellung von dentalen Kompositblöcken;
- Figur 3:: Anordnung einer dritten zur Erfindung gehörende Ausführungsform einer Vorrichtung für die Ausführung des erfindungsgemässen Verfahrens zur Herstellung von dentalen Kompositblöcken.

Die im Rahmen eines Ausführungsbeispiels eingesetzten Kompositmaterialien sind beispielhaft der nachfolgenden Tabelle zu entnehmen.

| | |
|---|---|
| Harz (Methacrylat / Nanofüller) | 33,5 Gew.-% |
| Bariumglas, 0,7 und 1,2µm (1:1; Schott) | 64,0 Gew.-% |
| Peroxidischer Initiator | 2,0 Gew.-% |
| Farben/Stabilisatoren | 3,5 Gew.-% |

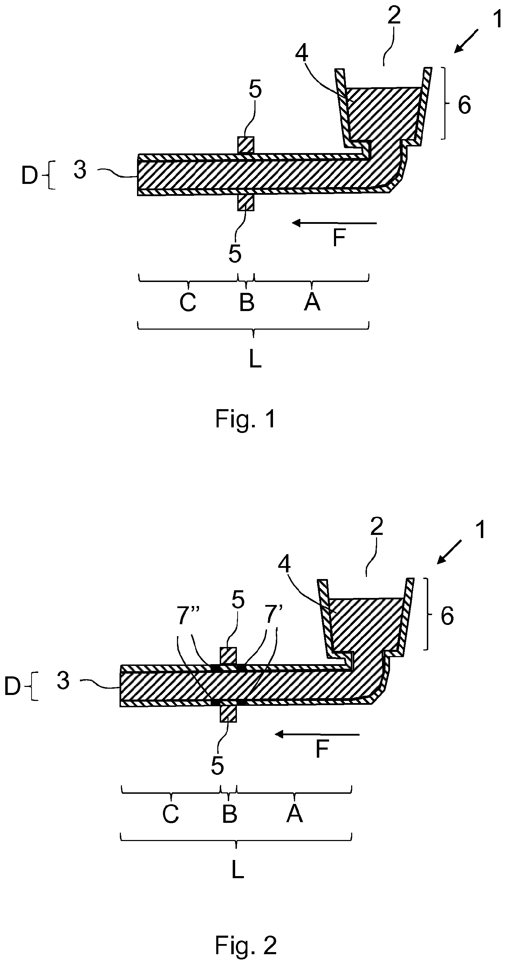

Figur 1 zeigt eine nicht zur Erfindung gehörende Vorrichtung 1 umfassend einen hohlzylindrischen Bereich mit der Länge L und ein Reservoir 6. Durch eine erste Öffnung 2 wird aushärtbares Kompositmaterial 4 in das Reservoir 6 der Vorrichtung 1 eingeführt. Das Reservoir 6 steht im Kontakt mit dem hohlzylindrischen Bereich der Vorrichtung 1, sodass das aushärtbare Kompositmaterial 4 in den hohlzylindrischen Bereich einfliesst. Ein Einfliessen bzw. Nachfliessen von aushärtbaren Kompositmaterial erfolgt in der Fliessrichtung F. Die Vorrichtung 1 umfasst weiter eine Temperiereinrichtung 5, welche einen Energieeintrag über die Wandung der Vorrichtung auf das aushärtbare Kompositmaterial ausübt. Derart wird ankommendes Kompositmaterial im Bereich der Temperiereinrichtung 5 ausgehärtet. Durch Nachfliessen des aushärtbaren Kompositmaterial im Bereich A der Vorrichtung 1 wird im Bereich B der Vorrichtung ausgehärtetes Kompositmaterial durch den Bereich C und die zweite Öffnung 3 der Vorrichtung 1 ausgeleitet. Auf diese Weise wird kontinuierlich aus aushärtbarem Kompositmaterial ausgehärtetes Kompositmaterial hergestellt, welches nach dem Verlassen aus der zweiten Öffnung 3 der Vorrichtung 1 zu dentalen Kompositblöcken zurechtgeschnitten werden kann. Die Vorrichtung 1 kann mit vorteilhaften Breiten D und Längen L ausgestaltet sein.

Figur 2 zeigt eine zur Erfindung gehörende Vorrichtung, die alle Merkmale aufweist, die bereits vorgängig für Figur 1 beschrieben wurden. Des Weiteren zeigt Figur 2 zwei Isolatoren 7', 7", welche die Temperiereinrichtung 5 flankieren. Dabei ist der erste Isolator 7' aufwärts der Temperiereinrichtung 5 in Fliessrichtung F und der zweite Isolator 7 " abwärts der Temperiereinrichtung 5 in Fliessrichtung F angeordnet. Derart wird der Energieeintrag auf die Wandung der Vorrichtung 1 durch die Temperiereinrichtung 5 durch die beiden Isolatoren 7', 7" an einer Ausdehnung auf andere Bereiche der Vorrichtung gehindert. Dementsprechend erfolgt der Energieeintrag nur im Bereich B der Vorrichtung, sodass ein Aushärten, Polymerisieren des aushärtbaren Kompositmaterial nur in diesem Bereich B erfolgt. Ein Anpolymerisieren im Bereich A kann somit ausgeschlossen werden. Auf diese Weise wird das aufsetzbare Kompositmaterial im Bereich B gezielt und kontrolliert ausgehärtet.

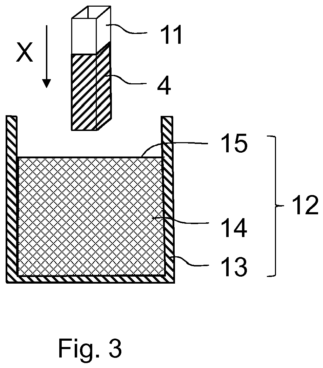

Figur 3 zeigt eine zur Erfindung gehörende Anordnung einer Küvette 11 und einer Wärmequelle 12 in Form eines Heizbades 13 mit einer Heizflüssigkeit 14 und einer Oberfläche 15 der Heizflüssigkeit 14. Die Küvette 11 ist mit aushärtbares Kompositmaterial 4 befüllt. Die befüllte Küvette 11 wird in der Bewegungsrichtung X kontrolliert der Oberfläche 15 der Heizflüssigkeit 14 genähert und in diese eingetaucht. Durch ein kontinuierliches Nachführen der befüllten Küvette wird durch ein Eintauchen in die Heizflüssigkeit eine definierte Wärmefront auf das aushärtbare Kompositmaterial 4 angelegt. Entsprechend erfolgt eine Polymerisation des Kompositmaterials in dem Bereich der Wärmefront und somit schichtweise entlang der Bewegungsrichtung X. Die Wand der Küvette weist eine Wärmeleitfähigkeit im Bereich von 0,05 bis 12 W/(m x K) auf. Die Wand der Küvette kann eine Wärmeleitfähigkeit im Bereich von 0,14 bis 1,2 W/(m x K) aufweisen. Die gewählte Wärmeleitfähigkeit gewährleistet eine definierte Wärmefront zur Aushärtung des Kompositmaterials innerhalb der Küvette. Somit wird ein dentales Kompositmaterial zur Herstellung von dentalen Kompositblöcken bereitgestellt, welches geringe Fehlstellen aufweist.

## Patentansprüche

1. Verfahren zur Herstellung von dentalen Kompositblöcken umfassend die Schritte
- Bereitstellen einer im Wesentlichen hohlzylindrischen Form (11),
- Bereitstellen eines aushärtbaren Kompositmaterials (4),
- Bereitstellen einer fokussierbaren Wärmequelle (12),
- Einbringen des aushärtbaren Kompositmaterials (4) in die im Wesentlichen hohlzylindrischen Form (11),
- Optional: luftfreies Verdichten des eingebrachten, aushärtbaren Kompositmaterials (4) in der Form (11),
- Aushärten des eingebrachten, aushärtbaren Kompositmaterials (4) mittels eines Wärmetransfers auf die im Wesentlichen hohlzylindrische Form (11),
wobei die Wandung der im Wesentlichen hohlzylindrischen Form (11), derart ausgestaltet ist, dass sie eine Wärmeleitfähigkeit im Bereich von 0,05 bis 12 W/(m x K) aufweist.

2. Verfahren nach Anspruch 1, wobei die im Wesentlichen hohlzylindrische Form (11) in Form eines Behälters ausgebildet ist.

3. Verfahren nach einem der Ansprüche 1 bis 2, wobei das luftfreie Verdichten des eingebrachten, aushärtbaren Kompositmaterials (4) in der Form (11), mittels Gravitation, Sedimentation oder Pressen erfolgt.

4. Verfahren nach einem der Ansprüche 1 bis 3, wobei das Aushärten des eingebrachten, aushärtbaren Kompositmaterials (4) mittels eines sukzessiven Wärmetransfers auf die im Wesentlichen holzylindrische Form (11) erfolgt.

5. Verfahren nach einem der Ansprüche 1 bis 4, wobei die Wandung der im Wesentlichen hohlzylindrischen Form (11) eine Wärmeleitfähigkeit im Bereich von 0,14 bis 1,2 W/(m x K) aufweist.

6. Verfahren nach einem der Ansprüche 1 bis 5, wobei eine Halterung zur Weiterverarbeitung des Kompositmaterials (4) zu einer dentalen Restauration an das ausgehärtete Kompositmaterial (4) angebracht wird.

7. Verfahren nach einem der Ansprüche 1 bis 6, wobei die im Wesentlichen hohlzylindrische Form (11), derart ausgestaltet ist, dass sie im Wesentlichen die Abmessungen eines dentalen Kompositblocks aufweist.

8. Verfahren nach einem der Ansprüche 1 bis 7, wobei das Kompositmaterial (4) > 40 Gew.-% Füller aufweist.

9. Verfahren nach einem der Ansprüche 1 bis 8, wobei die Wärmequelle (12) und/oder die im Wesentlichen hohlzylindrische Form (11),höhenverstellbar angeordnet ist.

10. Durchflussvorrichtung, im Wesentlichen hohlzylindrische Durchflussvorrichtung, für die Herstellung eines dentalen Kompositblocks wobei die Vorrichtung
- in einem ersten Bereich entlang eines Teils der Länge der Vorrichtung eine Isolierung aufweist,
- in einem zweiten Bereich eine weitere Isolierung aufweist, wobei zwischen dem ersten und dem zweiten Bereich entlang der Länge in einem Bereich des Energieeintrags (B) ein Abstand besteht,
wobei die Isolatoren derart ausgestaltet und angeordnet sind, dass bei einem Wärmeeintrag auf den Bereich des Energieeintrags (B) der Durchflussvorrichtung die Wärme dort konzentriert wird.

11. Durchflussvorrichtung nach Anspruch 10, wobei die im Wesentlichen hohlzylindrische Durchflussvorrichtung in Form einer zweiseitig geöffneten Durchflussvorrichtung ausgebildet ist.

## Claims

1. Method of producing dental composite blocks comprising the steps of
- providing a substantially hollow cylindrical mold (11),
- providing a curable composite material (4),
- providing a focusable heat source (12),
- placing the curable composite material (4) into the substantially hollow cylindrical mold (11),
- optionally: compressing the introduced curable composite material (4) in the mold (11) without air,
- curing the introduced curable composite material (4) by means of a heat transfer to the substantially hollow cylindrical mold (11),
wherein the wall of the substantially hollow cylindrical mold (11) is configured to have a thermal conductivity in the range of 0.05 to 12 W/(m x K).

2. Method according to claim 1, wherein the substantially hollow-cylindrical mold (11) is formed in the shape of a container.

3. Method according to any one of claims 1 to 2, wherein the air-free compaction of the introduced, curable composite material (4) in the mold (11), is carried out by means of gravitation, sedimen-tation or pressing.

4. Method according to any one of claims 1 to 3, wherein the curing of the introduced, curable composite material (4) is effected by means of a successive heat transfer to the essentially wood-cylindrical mold (11).

5. Method according to any one of claims 1 to 4, wherein the wall of the substantially hollow cylindrical mold (11) has a thermal conductivity in the range of 0.14 to 1.2 W/(m x K).

6. Method according to any one of claims 1 to 5, wherein a holder for further processing the composite material (4) into a dental restoration is attached to the cured composite material (4).

7. Method according to any one of claims 1 to 6, wherein the substantially hollow cylindrical mold (11), is configured to have substantially the dimensions of a dental composite block.

8. Method according to any one of claims 1 to 7, wherein the composite material (4) comprises > 40% by weight filler.

9. Method according to any one of claims 1 to 8, wherein the heat source (12) and/or the substantially hollow cylindrical mold (11),is arranged to be adjustable in height.

10. Flow-through device, substantially hollow-cylindrical flow-through device, for the production of a dental composite block wherein the device is
- in a first area along a part of the length of the device has an insulation,
- in a second region, further insulation, there being a gap between the first and second regions along the length in a region of energy input (B),
the insulators being designed and arranged in such a way that, in the event of heat being applied to the region of the energy input (B) of the flow-through device, the heat is concentrated there.

11. Flow-through device according to claim 10, wherein the essentially hollow-cylindrical flow-through device is designed in the form of a flow-through device open on two sides.

## Revendications

1. Méthode de fabrication de blocs de composite dentaire comprenant les étapes suivantes
- fournir un moule cylindrique sensiblement creux (11),
- fournir un matériau composite durcissable (4),
- fournir une source de chaleur focalisable (12),
- placer le matériau composite durcissable (4) dans le moule cylindrique sensiblement creux (11),
- éventuellement : compression sans air du matériau composite durcissable introduit (4) dans le moule (11),
- durcir le matériau composite durcissable introduit (4) au moyen d'un transfert de chaleur vers le moule cylindrique sensiblement creux (11),
dans lequel la paroi du moule cylindrique sensiblement creux (11) est configurée pour avoir une conductivité thermique dans la gamme de 0,05 à 12 W/(m x K).

2. Méthode selon la revendication 1, dans laquelle la forme cylindrique sensiblement creuse (11) se présente sous la forme d'un récipient.

3. Méthode selon l'une quelconque des revendications 1 à 2, dans laquelle le compactage sans air du matériau composite durcissable introduit (4) dans le moule (11) est effectué par gravitation, sédimentation ou pressage.

4. Méthode selon l'une quelconque des revendications 1 à 3, dans laquelle le durcissement du matériau composite durcissable introduit (4) est effectué au moyen d'un transfert thermique successif vers le moule sensiblement cylindrique en bois (11).

5. Méthode selon l'une quelconque des revendications 1 à 4, dans laquelle la paroi du moule cylindrique sensiblement creux (11) présente une conductivité thermique comprise entre 0,14 et 1,2 W/(m x K).

6. Méthode selon l'une quelconque des revendications 1 à 5, dans laquelle un support pour la transformation ultérieure du matériau composite (4) en une restauration dentaire est fixé au matériau composite durci (4).

7. Méthode selon l'une quelconque des revendications 1 à 6, dans laquelle le moule cylindrique sensiblement creux (11), est configuré pour avoir sensiblement les dimensions d'un bloc de composite dentaire.

8. Méthode selon l'une quelconque des revendications 1 à 7, dans laquelle le matériau composite (4) comprend > 40% en poids de charge.

9. Méthode selon l'une quelconque des revendications 1 à 8, dans laquelle la source de chaleur (12) et/ou le moule cylindrique sensiblement creux (11),est agencée pour être réglable en hauteur.

10. Dispositif d'écoulement, dispositif d'écoulement cylindrique sensiblement creux, pour la production d'un bloc de composite dentaire, dans lequel le dispositif est
- dans une première région, sur une partie de la longueur du dispositif, une isolation,
- dans une deuxième région, une isolation supplémentaire, un espace étant prévu entre les première et deuxième régions le long de la longueur dans une région d'entrée d'énergie (B) ,
les isolateurs étant conçus et disposés de manière à ce que, en cas d'apport de chaleur dans la zone de l'entrée d'énergie (B) du dispositif de passage, la chaleur s'y concentre.

11. Dispositif d'écoulement selon la revendication 10, dans lequel le dispositif d'écoulement sensiblement cylindrique creux est conçu sous la forme d'un dispositif d'écoulement ouvert sur deux côtés.
